# EUROPÄISCHE PATENTSCHRIFT

(11) **EP 0 902 232 B1**
(45) Veröffentlichungstag und Bekanntmachung des Hinweises auf die Patenterteilung: **03.04.2002**
(21) Anmeldenummer: 98106845.5
(22) Anmeldetag: 15.04.1998
(51) Int. Cl.: F22B 37/04, F01K 21/06, C23F 11/00, C23F 11/14, G01N 17/00

(54) **Verfahren zum Betreiben eines von einem Medium durchströmten Bauteils und Aufbereitungssystem für ein Medium**
Process for operating a device traversed by a fluid and preparation system for a fluid
Procédé pour opérer un dispositif traversé par un fluide et système de préparation d'un fluide

(30) Priorität: 28.04.1997 DE 19717957
(43) Veröffentlichungstag der Anmeldung: 17.03.1999
(73) Patentinhaber: SIEMENS AKTIENGESELLSCHAFT, 80333 München (DE)
(72) Erfinder: Langner, Alexander, Dr., 91052 Erlangen (DE)

(56) Entgegenhaltungen:
- EP-A- 0 340 977
- EP-A- 0 469 772
- EP-A- 0 469 773
- WO-A-93/06260
- US-A- 2 460 259
- US-A- 2 712 531
- US-A- 4 775 005

## Beschreibung

Die Erfindung betrifft ein Verfahren zum Betreiben eines von einem Medium durchströmten Bauteils. Sie richtet sich weiter auf ein Aufbereitungssystem für ein ein Bauteil durchströmendes Medium und auf eine Dampfkraftanlage mit einem derartigen Aufbereitungssystem.

In einer Dampfkraftanlage wird üblicherweise eine Dampfturbinenanlage zur Erzeugung elektrischer Energie oder auch zum Antrieb einer Arbeitsmaschine eingesetzt. Dabei wird ein in einem Verdampferkreislauf der Dampfturbinenanlage geführtes Arbeitsmedium, üblicherweise ein Wasser-Dampf-Gemisch, in einem Verdampfer verdampft. Der dabei erzeugte Dampf entspannt sich arbeitsleistend in der Dampfturbine und wird anschließend einem Kondensator zugeführt. Das im Kondensator kondensierte Arbeitsmedium wird dann über eine Speisewasserpumpe erneut dem Verdampfer zugeführt. Die Dampfkraftanlage kann dabei auch als Gas- und Dampfturbinenanlage ausgebildet sein, bei der ein als Verdampfer vorgesehener Abhitzedampferzeuger durch entspanntes Arbeitsmittel aus der Gasturbine beheizt wird.

Aus Betriebsgründen kann es erforderlich sein, das im Wasser-Dampf-Kreislauf einer derartigen Dampfkraftanlage umlaufende Arbeitsmedium oder Wasser bzw. Dampf mit chemischen Zusätzen zu versehen. Dabei kann abhängig vom Konzept des Verdampfers, beispielsweise zum Korrosionsschutz, eine alkalische Basischemie des Arbeitsmediums mit einem PH-Wert von mehr als 9,0 erforderlich sein. Zur Einstellung dieser alkalischen Basischemie kann dem Arbeitsmedium beispielsweise Ammoniak (NH₃), Natronlauge (NaOH) oder auch Natriumphosphat (Na₃PO₄) zugemischt sein.

Ein derartiges Arbeitsmedium mit alkalischer Basischemie kann jedoch - abhängig von den für die Bauteile oder Komponenten des Wasser-Dampf-Kreislaufs der Dampfkraftanlage verwendeten Materialien - zu erhöhter Korrosion an einem vom Arbeitsmedium durchströmten Bauteil führen. Korrosion in einem derartigen Bauteil, wie sie beispielsweise beim Verfahren nach der EP 0 469 772 A2 in zirkulierendem Wasser festgestellt wird, kann bestimmend für die Lebensdauer des Bauteils sein. Bei Verwendung eines für das Bauteil aggressiven Arbeitsmediums mit alkalischer Basischemie weist ein derartiges Bauteil somit nur eine begrenzte Lebensdauer auf. Insbesondere ist ein luftgekühlter Kondensator in Aluminiumbauweise, dessen Einsatz in einer Dampfkraftanlage im Hinblick auf besondere Betriebsbedingungen wünschenswert sein kann, im allgemeinen nicht für ein Arbeitsmedium mit alkalischer Basischemie geeignet.

Der Erfindung liegt daher die Aufgabe zugrunde, ein Verfahren zum Betreiben eines von einem Medium durchströmten Bauteils anzugeben, mit dem auch bei Verwendung eines für das Bauteil aggressiven Arbeits- oder Strömungsmediums eine besonders lange Lebensdauer des Bauteils gewährleistet ist. Weiterhin soll ein zur Durchführung des Verfahrens besonders geeignetes Aufbereitungssystem für ein ein Bauteil durchströmendes Medium angegeben werden.

Bezüglich des Verfahrens zum Betreiben eines von einem Medium durchströmten Bauteils wird die genannte Aufgabe erfindungsgemäß gelöst, indem im von dem Bauteil abströmenden Medium ein die Konzentration eines im Wandmaterial des Bauteils eingesetzten Werkstoffs charakterisierender Kennwert ermittelt wird, und indem in Abhängigkeit von dem ermittelten Kennwert dem dem Bauteil zuströmenden Medium ein filmbildender Hilfsstoff zugemischt wird, der sich auf den dem Arbeitsmedium ausgesetzten Wandflächen des Bauteils niederschlägt.

Die Erfindung geht dabei von der Überlegung aus, daß eine besonders lange Lebensdauer eines von einem aggressiven Medium durchströmten Bauteils erreichbar ist, indem die auf das Medium zurückzuführende Korrosion besonders gering gehalten wird. Für eine besonders geringe Korrosion sollten diejenigen Komponenten des Bauteils, die mit dem Medium in unmittelbaren Kontakt kommen, mit einer korrosionshemmenden Schutzschicht überzogen sein. In besonders einfacher Weise ist eine derartige Schutzschicht mit Hilfe eines filmbildenden Hilfsstoffes, vorzugsweise eines filmbildenden Tensids, auf die dem Medium ausgesetzten Wandflächen des Bauteils aufbringbar. Um auch bei längerer Betriebsdauer des Bauteils eine Abtragung der filmartigen Schutzschicht auf den dem Medium ausgesetzten Wandflächen des Bauteils mit besonders geringem Aufwand sicher zu vermeiden, sollte die Schutzschicht bedarfsweise erneuert oder verstärkt werden. Ein Bedarf zur Erneuerung der Schutzschicht ist dabei auf besonders einfache Weise detektierbar, indem das Einsetzen der Korrosion des dem Medium ausgesetzten Wandmaterial festgestellt wird. Dazu wird beim Betrieb des Bauteils die Konzentration des Wandmaterials im aus dem Bauteil abströmenden Medium kontinuierlich überwacht. Für eine bedarfsgerechte Erneuerung oder Verstärkung der Schutzschicht wird das filmbildende Hilfsmittel dem dem Bauteil zuströmenden Medium in Abhängigkeit von der gemessenen Konzentration des Wandmaterials zugemischt.

Zweckmäßigerweise wird dem dem Bauteil zuströmenden Medium als filmbildender Hilfsstoff ein filmbildendes Tensid, vorzugsweise Octadecylamin, zugemischt. Ein derartiges filmbildendes Tensid umfaßt üblicherweise ein Gemisch von langkettigen, unverzweigten Kohlenwasserstoffen mit einer endständigen Aminogruppe. Der Anteil primärer Amine sollte dabei vorzugsweise etwa 99.9% betragen.

Das zur Anwendung kommende Tensid oder Fettamingemisch kann dabei als Hauptbestandteil beispielsweise Octadecylamin (C18) in einer Kombination von 58 bis 70% und/oder C16 in einer Konzentration von 23 bis 34% enthalten. Wie umfangreiche Versuche ergaben, bildet ein derartiges Tensid eine monomolekulare, organische Sperrschicht auf der Werkstoffoberfläche. Eine derartige Sperrschicht verhindert einen direkten Kontakt zwischen dem aggressiven Medium und den diesem ausgesetzten Wandflächen des Bauteils weitgehend, so daß die Korrosion infolge des aggressiven Mediums besonders gering ist. Die Sperrschicht ist dabei vorzugsweise aus kationenaktiven und somit oberflächenaktiven filmbildenden Tensiden gebildet.

Das Verfahren ist besonders zum Betreiben eines Kondensators einer Dampfkraftanlage geeignet. Zweckmäßigerweise wird dabei der Hilfsstoff in eine Wasser-Dampf-Trommel der Dampfkraftanlage eingespeist. Zur Festlegung des Kennwerts wird dabei vorzugsweise die Eisenkonzentration oder die Aluminiumkonzentration im aus dem Kondensator abströmenden Medium gemessen.

Bezüglich des Aufbereitungssystems für ein ein Bauteil durchströmendes Medium wird die genannte Aufgabe gelöst, indem an einen Regler eingangsseitig ein Meßsystem zur Ermittlung eines die Konzentration eines im Wandmaterial des Bauteils eingesetzten Werkstoffs im aus dem Bauteil abströmenden Medium charakterisierenden Kennwerts angeschlossen ist, wobei der Regler ausgangsseitig mit einer- dem Bauteil mediumseitig vorgeschalteten Zumischeinheit für einen filmbildenden Hilfsstoff verbunden ist.

Das Aufbereitungssystem ist besonders geeignet für den Einsatz in einer Dampfkraftanlage mit einem in einen Wasser-Dampf-Kreislauf geschalteten Kondensator. Das Aufbereitungssystem ist dabei dem Kondensator als Bauteil zugeordnet.

Vorzugsweise ist die Zumischeinheit für den filmbildenden Hilfsstoff an eine dem Kondensator im Wasser-Dampf-Kreislauf vorgeschaltete Wasser-Dampf-Trommel angeschlossen. Die Dampfkraftanlage kann somit mit besonders geringem Aufwand ausgeführt sein

Die mit der Erfindung erzielten Vorteile bestehen insbesondere darin, daß durch die Zumischung des filmbildenden Hilfsstoffs in das dem Bauteil zuströmende Medium in Abhängigkeit von der Konzentration des Wandmaterials im aus dem Bauteil abströmenden Medium mit besonders einfachen Mitteln eine bedarfsgerechte Regenerierung einer Schutzschicht für dem Medium ausgesetzte Wandflächen des Bauteils gewährleistet ist.

Eine Korrosion der dem Medium ausgesetzten Wandflächen des Bauteils aufgrund des Mediums ist somit weitgehend vermieden, so daß das Bauteil eine besonders lange Lebensdauer aufweist. Bei einer Dampfkraftanlage ist somit ohne Einschränkung der Lebensdauer die Verwendung eines luftgekühlten Kondensator in Aluminiumausführung möglich, auch wenn infolge sonstiger Betriebsanforderungen ein Betrieb der Dampfkraftanlage mit einem Arbeitsmedium mit alkalischer Basischemie erforderlich sein sollte. Ein derartiger Kondensator ist somit besonders flexibel einsetzbar.

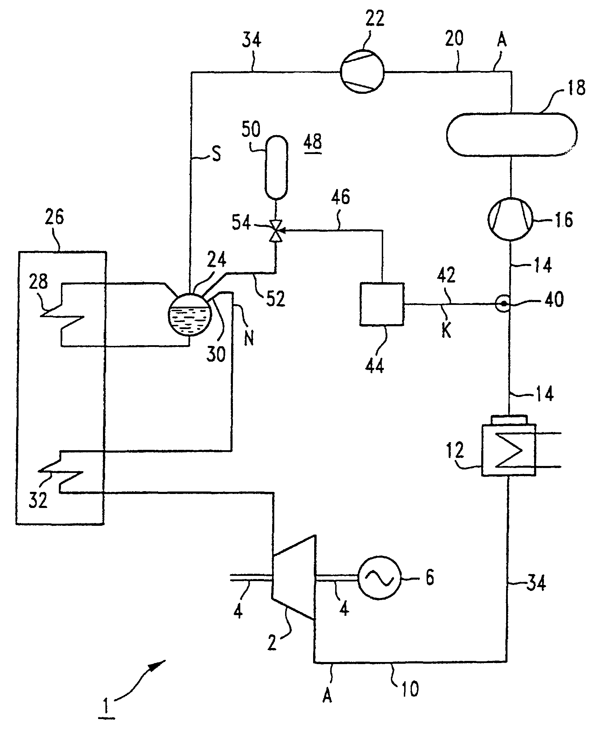

Ein Ausführungsbeispiel der Erfindung wird anhand einer Zeichnung näher erläutert. Darin zeigt die Figur schematisch eine Dampfkraftanlage.

Die Dampfkraftanlage 1 gemäß der Figur umfaßt eine Dampfturbine 2, die über eine Turbinenwelle 4 mit einem Generator 6 verbunden ist. Die Dampfturbine 2 ist ausgangsseitig über eine Dampfleitung 10 an einen Kondensator 12 angeschlossen, der als luftgekühlter Kondensator in Aluminiumausführung ausgebildet ist. Dabei sind insbesondere diejenigen Wandflächen des Kondensators 12, die bei seinem Betrieb mit dem ihn durchströmenden Arbeitsmedium A in Kontakt kommen, in Aluminium ausgeführt. Mit anderen Worten: Im Kondensator 12 ist als Wandmaterial für das im Wasser-Dampf-Kreislauf 34 strömende Arbeitsmedium Aluminium vorgesehen.

Der Kondensator 12 ist über eine Leitung 14, in die eine Kondensatpumpe 16 geschaltet ist, mit einem Speisewasserbehälter 18 verbunden. Der Speisewasserbehälter 18 ist ausgangsseitig über eine Zuführungsleitung 20, in die eine Speisewasserpumpe 22 geschaltet ist, an eine Dampftrommel 24 angeschlossen. Zur Vorwärmung von der Dampftrommel 24 zuzuführendem Speisewasser S kann in die Leitung 20 eine Anzahl nicht dargestellter Vorwärmeheizflächen oder Economizer geschaltet sein.

Die Dampftrommel 24 ist wasserausgangsseitig und dampfeingangsseitig mit einem in einem Dampferzeuger 26 angeordneten Verdampfer 28 verbunden. Im Ausführungsbeispiel ist der Dampferzeuger 26 als Abhitzedampferzeuger ausgebildet, der durch das Abgas einer nicht näher dargestellten Gasturbine beheizbar ist. Alternativ kann aber auch ein fossil- oder nuklearbefeuerter Dampferzeuger vorgesehen sein. An der Dampftrommel 24 ist weiterhin ein Nutzdampfausgang 30 angeordnet, der über einen im Dampferzeuger 26 angeordneten Überhitzer 32 an die Dampfturbine 2 angeschlossen ist.

Die Dampfturbine 2 kann eine oder mehrere Druckstufen umfassen. Je nach Anzahl der Druckstufen und je nach Auslegung des Wasser-Dampf-Kreislaufs 34 der Dampfturbine 2 können zusätzlich zu den in der Figur dargestellten Heizflächen 28 und 32 weitere Heizflächen vorgesehen sein.

In die an den Kondensator 12 ausgangsseitig angeschlossene Leitung 14 ist ein Meßsystem 40 geschaltet. Das Meßsystem 40 ist zur Ermittlung der Aluminiumkonzentration im Arbeitsmedium vorgesehen. Das Meßsystem 40 umfaßt dabei in nicht näher dargestellter Weise einen Meßfühler zur Messung der Aluminiumkonzentration im in der Leitung 14 geführten Arbeitsmedium. Das Meßsystem 40 ist über eine Datenleitung 42 an einen Regler 44 angeschlossen. Der Regler 44 wiederum ist ausgangsseitig über eine Datenleitung 46 mit einer Zumischeinheit 48 für ein filmbildendes Tensid, nämlich für Octadecylamin, verbunden.

Die Zumischeinheit 48 umfaßt einen Vorratsbehälter 50, der über eine Zumischleitung 52 an die Wasser-Dampf-Trommel 24 der Dampfkraftanlage 1 angeschlossen ist. Über den Wasser-Dampf-Kreislauf 34 ist die Zumischeinheit 48 dem Kondensator 12 somit arbeitsmediumseitig vorgeschaltet.

Zur Einstellung einer Einspeiserate des Tensids in den Wasser-Dampf-Kreislauf 34 ist in die Zumischleitung 34 ein über die Datenleitung 46 ansteuerbares Ventil 54 geschaltet.

Die Dampfkraftanlage 1 ist auch bei der Verwendung eines luftgekühlten Kondensators 12 in Aluminiumausführung für den Betrieb eines im Wasser-Dampf-Kreislauf 34 zirkulierenden Arbeitsmediums A mit alkalischer Basischemie ausgelegt. Dies ist dadurch ermöglicht, daß dem Arbeitsmedium A ausgesetzte Wandflächen der in den Wasser-Dampf-Kreislauf 34 geschalteten Komponenten, insbesondere des Kondensators 12, mit einer Schutzschicht versehen sind. Die Schutzschicht ist dabei als annähernd monomolekulare organische Sperrschicht ausgebildet und durch den Einsatz eines filmbildenden Tensids hergestellt. Die Schutzschicht verhindert einen unmittelbaren Kontakt insbesondere zwischen dem im Kondensator 12 verarbeiteten Aluminium und dem im Wasser-Dampf-Kreislauf 34 zirkulierenden, für Aluminium aggressiven Arbeitsmedium A.

Um auch bei längerem Betrieb der Dampfkraftanlage 1 ein teilweises oder vollständiges Abtragen der auf den Wandflächen des Kondensators 12 aufgebrachten Schutzschicht und eine daraus resultierende Korrosion sicher zu vermeiden, ist die Dampfkraftanlage 1 für eine bedarfsweise Regenerierung der Schutzschicht ausgelegt. Der Bedarf zur Regenerierung der auf den dem Arbeitsmedium A ausgesetzten Wandflächen des Kondensators 12 vorgesehen Schutzschicht wird dabei anhand einsetzender Korrosion dieser Wandflächen festgestellt. Auf eine einsetzende Korrosion dieser Wandflächen wird aus einem Ansteigen der Aluminiumkonzentration im aus dem Kondensator 12 abströmenden Arbeitsmedium A geschlossen. Dazu wird beim Betrieb der Dampfkraftanlage 1 die Aluminiumkonzentration im aus dem Kondensator 12 abströmenden Arbeitsmedium A kontinuierlich gemessen. Anhand des dabei gewonnenen Meßwerts generiert das Meßsystem 40 einen die Aluminiumkonzentration charakterisierenden Kennwert K, der über die Datenleitung 42 an den Regler 44 übermittelt wird.

In Abhängigkeit von dem so ermittelten Kennwert K erzeugt der Regler 44 einen Stellbefehl für das Ventil 54, der über die Datenleitung 46 übermittelt wird. Bei einer Aluminiumkonzentration unterhalb eines vorgebbaren Grenzwertes wird das Ventil 54 geschlossen gehalten. Bei Überschreiten des vorgebbaren Grenzwertes hingegen wird das Ventil 54 in Abhängigkeit vom Kennwert K geöffnet. Durch die Öffnung des Ventils 54 erfolgt somit eine bedarfsweise Zumischung des im Vorratsbehälter 50 gelagerten filmbildenden Tensid Octadecylamin in den Wasser-Dampf-Kreislauf 34 der Dampfkraftanlage 1. Das so zugemischte filmbildende Tensid gelangt über den Wasser-Dampf-Kreislauf 34 in den Kondensator 12 und schlägt sich dort unter Ergänzung oder Erneuerung der dort vorhandenen Schutzschicht auf den dem Arbeitsmedium A ausgesetzten Wandflächen nieder. Somit ist eine bedarfsgerechte Regenerierung der Schutzschicht gewährleistet.

## Patentansprüche

1. Verfahren zum Betreiben eines von einem Medium durchströmten Bauteils, bei dem im von dem Bauteil abströmenden Medium (A) ein die Konzentration eines im Wandmaterial des Bauteils eingesetzten Werkstoffs charakterisierender Kennwert (K) ermittelt wird, und bei dem in Abhängigkeit von dem ermittelten Kennwert (K) dem dem Bauteil zuströmenden Medium (A) ein filmbildender Hilfsstoff zugemischt wird, der sich auf den dem Arbeitsmedium ausgesetzten Wandflächen des Bauteils niederschlägt.

2. Verfahren nach Anspruch 1, bei dem als filmbildender Hilfsstoff ein filmbildendes Tensid zugemischt wird.

3. Verfahren nach Anspruch 2, bei dem als filmbildendes Tensid ein Gemisch primärer Fettamine mit dem Hauptbestandteil Octadecylamin eingesetzt wird.

4. Verfahren nach einem der Ansprüche 1 bis 3, bei dem als Bauteil ein Kondensator (12) einer Dampfkraftanlage (1) vorgesehen ist.

5. Verfahren nach Anspruch 4, bei dem das Tensid in eine Wasser-Dampf-Trommel (24) der Dampfkraftanlage (1) eingespeist wird.

6. Verfahren nach einem der Ansprüche 1 bis 5, bei dem zur Festlegung des Kennwerts (K) die Eisenkonzentration im abströmenden Medium (A) gemessen wird.

7. Verfahren nach einem der Ansprüche 1 bis 5, bei dem zur Festlegung des Kennwerts (K) die Aluminiumkonzentration im abströmenden Medium (A) gemessen wird.

8. Aufbereitungssystem für ein ein Bauteil durchströmendes Medium (A) mit einem Regler (44), an den eingangsseitig ein Meßsystem (40) zur Ermittlung eines die Konzentration eines im Wandmaterial des Bauteils eingesetzten Werkstoffs im aus dem Bauteil abströmenden Medium (A) charakterisierenden Kennwerts (K) angeschlossen ist, und der ausgangsseitig mit einer dem Bauteil mediumseitig vorgeschalteten Zumischeinheit (48) für einen filmbildenden Hilfsstoff verbunden ist.

9. Dampfkraftanlage (1) mit einem in einen Wasser-Dampf-Kreislauf (34) geschalteten Kondensator (12), wobei dem Kondensator (12) ein Regler (44) zugeordnet ist, an den eingangsseitig ein Meßsystem (40) zur Ermittlung eines die Konzentration eines im Wandmaterial des Bauteils eingesetzten Werkstoffs im aus dem Kondensator (12) abströmenden Kondensat charakterisierenden Kennwerts (K) angeschlossen ist, und der ausgangsseitig mit einer dem Kondensator (12) dampfseitig vorgeschalteten Zumischeinheit (48) für einen filmbildenden Hilfsstoff verbunden ist.

10. Dampfkraftanlage (1) nach Anspruch 9, bei der die Zumischeinheit (48) an eine dem Kondensator (12) im Wasser-Dampf-Kreislauf (34) vorgeschaltete Wasser-Dampf-Trommel (24) angeschlossen ist.

## Claims

1. A process for operating a constructional element perfused by a fluid, wherein a parameter (*K*) characterising the concentration of an engineering material which is employed in the wall material of the constructional element is ascertained in the fluid (*A*) flowing away from the constructional element and wherein a film-forming auxiliary substance is admixed, in a manner depending on the parameter (*K*) ascertained, to the fluid (*A*) flowing into the constructional element, said film-forming auxiliary substance being deposited on the wall surfaces of the constructional element that are exposed to the working fluid.

2. Process according to Claim 1, wherein a film-forming surfactant is admixed by way of film-forming auxiliary substance.

3. Process according to Claim 2, wherein a mixture of primary fatty amines with the principal constituent octadecylamine is employed by way of film-forming surfactant.

4. Process according to one of Claims 1 to 3, wherein a condenser (12) of a steam power plant (1) is provided by way of constructional element.

5. Process according to Claim 4, wherein the surfactant is fed into a water/steam drum (24) of the steam power plant (1).

6. Process according to one of Claims 1 to 5, wherein with a view to establishing the parameter (*K*) the iron concentration in the fluid (*A*) flowing away is measured.

7. Process according to one of Claims 1 to 5, wherein with a view to establishing the parameter (*K*) the aluminium concentration in the fluid (*A*) flowing away is measured.

8. A reprocessing system for a fluid (*A*) perfusing a constructional element, with a regulator (44), to which a measuring system (40) for ascertaining a parameter (*K*) characterising the concentration of an engineering material which is employed in the wall material of the constructional element in the fluid (*A*) flowing away out of the constructional element is connected on the input side, and which is connected on the output side to an admixing unit (48) for a film-forming auxiliary substance which is placed upstream of the constructional element on the fluid side.

9. A steam power plant (1) with a condenser (12) connected into a water/steam circuit (34), a regulator (44) being assigned to the condenser (12), to which regulator a measuring system (40) for ascertaining a parameter (*K*) characterising the concentration of an engineering material which is employed in the wall material of the constructional element in the condensate flowing away out of the condenser (12) is connected on the input side, and which is connected on the output side to an admixing unit (48) for a film-forming auxiliary substance which is connected upstream of the condenser (12) on the steam side.

10. Steam power plant (1) according to Claim 9, wherein the admixing unit (48) is connected to a water/steam drum (24) which is placed upstream of the condenser (12) in the water/steam circuit (34).

## Revendications

1. Procédé pour faire fonctionner un élément dans lequel passe un fluide qui consiste à déterminer dans le fluide (A) sortant de l'élément une valeur (K) caractéristique caractérisant la concentration d'un matériau utilisé dans la matière de la paroi de l'élément et à ajouter, en fonction de la valeur (K) caractéristique déterminée, au fluide (A) affluent à l'élément un adjuvant filmogène qui précipite sur les surfaces de la paroi de l'élément exposées au fluide utilisé dans le système.

2. Procédé suivant la revendication 1, qui consiste à ajouter comme adjuvant filmogène un agent tensioactif filmogène.

3. Procédé suivant la revendication 2, qui consiste à utiliser comme agent tensioactif filmogène un mélange d'amines grasses primaires, dont le constituant principal est l'octadécylamine.

4. Procédé suivant l'une des revendications 1 à 3, qui consiste à prévoir comme élément un condensateur (12) d'une centrale (1) thermique à vapeur.

5. Procédé suivant la revendication 4, qui consiste à introduire l'agent tensioactif dans un ballon (24) eau-vapeur de la centrale (1) thermique à vapeur.

6. Procédé suivant l'une des revendications 1 à 5, qui consiste, pour fixer la valeur (K) caractéristique, à mesurer la concentration de fer dans le fluide (A) qui sort.

7. Procédé suivant l'une des revendications 1 à 5, qui consiste, pour fixer la valeur (K) caractéristique, à mesurer la concentration d'aluminium dans le fluide (A) qui sort.

8. Système de préparation d'un fluide (A) passant dans un élément, comprenant un régulateur (44) auquel est raccordé du côté de l'entrée un système (40) de mesure destiné à déterminer une valeur (K) caractéristique caractérisant la concentration d'un matériau utilisé dans la matière de la paroi de l'élément à partir du fluide (A) sortant de l'élément et qui est relié du côté de la sortie à une unité (48) montée en amont de l'élément du côté du fluide et destinée à l'addition d'un adjuvant filmogène.

9. Centrale (1) thermique à vapeur comprenant un condenseur (12) monté dans un circuit (34) eau-vapeur, dans laquelle il est associé au condenseur (12) un régulateur (44) auquel est raccordé du côté de l'entrée un système (40) de mesure destiné à déterminer une valeur (K) caractéristique caractérisant le matériau utilisé dans la matière de la paroi de l'élément dans le produit condensé sortant du condenseur (12) et qui est relié du côté de la sortie à une unité (48) montée en amont du côté de la vapeur du condenseur (12) et destinée à l'addition d'un adjuvant filmogène.

10. Centrale (1) thermique à vapeur, dans laquelle l'unité (8) d'addition est raccordée à un ballon (24) eau-vapeur monté en amont du condenseur (12) dans le circuit (34) eau-vapeur.
